**Europäisches Patentamt**

**European Patent Office**

**Office européen des brevets**

(19)

(11) Veröffentlichungsnummer: **0 112 999 B1**

(12) **EUROPÄISCHE PATENTSCHRIFT**

(45) Veröffentlichungstag der Patentschrift:
**28.01.87**

(51) Int. Cl.⁴: **C 04 B 18/08, C 04 B 18/12, C 04 B 20/04 // C04B22/00**

(21) Anmeldenummer: **83111058.0**

(22) Anmeldetag: **05.11.83**

(54) **Schaumbetonstein und Verfahren zu seiner Herstellung.**

(30) Priorität: **03.12.82 DE 3244765**

(43) Veröffentlichungstag der Anmeldung:
**11.07.84 Patentblatt 84/28**

(45) Bekanntmachung des Hinweises auf die Patenterteilung:
**28.01.87 Patentblatt 87/5**

(84) Benannte Vertragsstaaten:
**BE DE FR GB NL**

(56) Entgegenhaltungen:
**EP - A - 0 059 444
EP - A - 0 059 444
DD - A - 42 866
DE - A - 2 406 373
DE - C - 1 152 934**

**DEA-D 14657 IVc/80b (DEUTSCHE PORENBETON GMBH)
Chemical Abstracts Band 97, Nr. 18, 1. November 1982, Columbus, Ohio, USA J.G. ROSE et al. "Processing and material properties of energy-efficient sintered coal refuse lightweight aggregate", Seite 317, Spalte 2, Abstract Nr. 149649d**

(73) Patentinhaber: **Ackermann, Manfred F., Dipl.-Ing., Heide Strasse 49, D-4630 Bochum (DE)**

(72) Erfinder: **Erdmann, Wilfried, Dr.-Ing., Selbsthilfeweg 3, D-4630 Bochum (DE)**
Erfinder: **Köhling, Rolf, Dr., Lohbusch 1, D-4630 Bochum-Wattenscheid (DE)**
Erfinder: **Leininger, Dieter, Dr., Waldeck 16, D-4300 Essen 1 (DE)**

(74) Vertreter: **Schulte, Jörg, Dipl.-Ing., Hauptstrasse 2, D-4300 Essen-Kettwig (DE)**

**Beschreibung**

Die Erfindung betrifft einen Schaumbetonstein aus mineralischem Zuschlagstoff, einem Reaktionsmittel mit Härter zur Erreichung der notwendigen Grünfestigkeit, einem Blähmittel und Wasser. Die Erfindung betrifft ausserdem ein Verfahren zur Herstellung von derartigen Schaumbetonsteinen mit einem Zuschlagstoff aus staubartigen Sekundärstoffen und Abgängen des Steinkohlenbergbaus, wobei aus dem Zuschlagstoff, Reaktionsmittel und Blähmittel mit Wasser ein Mörtelkuchen angemischt, in Formen gegossen, nach dem Blähen und dem Erreichen der Grünfestigkeit entschalt, in Steine aufgeteilt und anschliessend gehärtet wird.

Derartige Schaumbetonsteine sind in der Regel grossformatige, dampfgehärtete Vollsteine oder Platten mit begrenztem Rohgewicht, die aus einer durch Gas aufgelockerten, feinkörnigen Mörtelmasse hergestellt werden. Derartige Schaumbetonsteine werden insbesondere wegen ihrer guten Wärmedämmwerte in verschiedenen Grössen und Wandstärken ohne zusätzliche Isolierungsschichten eingesetzt. Ihre Druckfestigkeit liegt in den unteren Grenzen der Druckfestigkeit von Kalksandsteinen. Für die Herstellung derartiger Schaumbetonsteine werden in der Regel unverändert mineralische Zuschlagstoffe wie Sand, Reaktionsmittel wie Kalk mit einem Härter zur Erreichung der notwendigen Grünfestigkeit wie Zement, einem Blähmittel wie Aluminiumpulver und Wasser eingesetzt. Aus diesen verschiedenen Anteilen wird ein Mörtelkuchen hergestellt, der aufgrund des zugemischten Aluminiums von Wasserstoffgas durchsetzt wird, so dass ein poriger Schaumbetonstein entsteht. Dieser Kuchen wird dann anschliessend ausgeschalt und mittels Stahldrähten in die gewünschten Bauelementgrössen aufgeteilt. Hiernach erfolgt eine Dampfhärtung bei 180 bis 200 °C über etwa 12 Stunden. Dabei muss eine bestimmte Zementmenge zugegeben werden, um dem Mörtelkuchen eine ausreichende Grünfestigkeit zu verleihen, damit dieser entschalt und mit Hilfe von Drähten zerteilt sowie anschliessend gehärtet werden kann. Seine Endfestigkeit erhält der Schaumbetonstein durch die Reaktion des $SiO_2$ im mineralischen Zuschlagstoff mit dem gebrannten Kalk im Rahmen des Härteprozesses. Die Schaumbetonsteine weisen dann eine Druckfestigkeit von 2,5 bis 5 N/mm² auf.

Im Rahmen des Abbaues von Mineralien im untertägigen Bergbau, vor allem im Steinkohlenbergbau fallen als taubes Gestein sogenannte Berge an, die nach neueren Methoden auf die verschiedenste Art und Weise u.a. zu hydraulisch abbindenden Formsteinen aus Bergebrechsand sowie Bergebrechsplitt oder Bergebrechschotter verarbeitet werden. Dabei ist es bekannt (EP-A-59 440), Zuschlagstoffe für zement- bzw. kalkgebundene Steine auch dadurch zu gewinnen, dass das im Steinkohlenbergbau im Gemisch mit Kohle anfallende Material durch Klassierung und/oder Sortierung nach der Dichte vom Kohlenstoff befreit und auf eine geeignete Korngrösse gebracht wird.

Allerdings wird auf diese Weise nur eine Reduzierung des vorhandenen Kohlenstoffs erreicht, nicht ein völliger Abbau. Aus der DE-A-D 14 657 ist es ausserdem bekannt, zur Herstellung von Porenbeton das beim Bergbau anfallende Material, wie auch Flotationsberge und auch Flugasche als Zuschlagstoff einzusetzen. Dennoch ist es bisher nicht gelungen, Schaumbetonsteine in der notwendigen Qualität aus derartigen Zuschlagstoffen zu gewinnen. Der Grund hierfür liegt insbesondere darin, dass die Bergematerialien insbesondere im Fein- und Feinstkornbereich erhebliche Mengen an Kohlenstoff aufweisen. Ausserdem reichert sich durch die Aufbereitung in den Feinstkornfraktionen Bergematerial mit geringer Kornfestigkeit zusätzlich an. Da andererseits die Rohstoffbasis für die Herstellung von Schaumbetonsteinen insbesondere in bedarfsnahen Bereichen durch Erschöpfung der abbaufähigen Lagerstätten schmaler wird und die Hersteller damit gezwungen sind, die Rohstoffe teilweise über erhebliche Entfernungen heranzutransportieren, wird die Herstellung von Schaumbetonsteinen immer teurer. Es wird daher schon seit langem nach geeigneten Ausweichrohstoffen gesucht.

Der Erfindung liegt die Aufgabe zugrunde, einen von Sandlagerstätten unabhängig herstellbaren und möglichst wenig Zement erfordernden Schaumbetonstein sowie ein Verfahren zu dessen Herstellung zu schaffen.

Die Aufgabe wird erfindungsgemäss dadurch gelöst, dass als Zuschlagstoff und zugleich als Härter die Asche von in Wirbelschichtfeuerungsanlagen unter Zusatz von Kalk und unter Einhaltung einer Temperatur unterhalb ihrer Schmelztemperatur ausgebrannte Flotationsberge dient.

Ein derartiger Zuschlagstoff, der keinen oder nur noch sehr wenig Kohlenstoff aufweist, kann in vorteilhafter Weise mit bekannten Reaktions- und Blähmitteln sowie Wasser zu einem Mörtelkuchen gemischt werden, der dann nach Erreichen der ausreichenden Grünfestigkeit entschalt, aufgeteilt und anschliessend gehärtet wird. In Testserien hat sich überraschend gezeigt, dass das Material unter dosierter und verringerter Zugabe von Zement, feingemahlenem ungelöschten Kalk und nur einer geringfügigen Zugabe von Aluminiumpulver bestimmter Körnung zu einem Mörtelkuchen mit schaumiger Struktur wird, der schon nach verhältnismässig kurzer Zeit (ca. 30 Minuten) eine ausreichende Grünfestigkeit erreicht. Überraschend dabei ist, dass die hydraulischen Eigenschaften so ausgeprägt sind, dass der Anteil an Zement reduziert werden kann bzw. dass auf Zement ganz verzichtet werden kann. Aufgrund der hydraulischen Eigenschaften der Asche von fein- und feinstkörnigen Bergen aus Wirbelschichtfeuerungsanlagen wird ein Schaumbetonstein hergestellt, der eine Frühfestigkeit und Grünfestigkeit aufweist, die zumindest in der Grössenordnung der bekannten Schaumbetonsteine liegt, wobei die Asche ohne weitere Vorbehandlung als Zuschlagstoff eingesetzt werden kann.

Besonders vorteilhaft ist eine Mischung aus dem Gesteinsstaub der Mahlanlagen und der Asche von Bergeschlamm aus Wirbelschichtfeuerungsanlagen, weil dabei einerseits eine spontane Reaktion, andererseits eine Einsparung an Zement erzielbar ist. Im übrigen bietet neben dieser Kombination auch der teilweise Ersatz einer der Komponenten Gesteinsstaub, Bergebrechsand, -splitt. -schotter durch E-Filterstaub aus Kraftwerken, insbesondere Steinkohlenkraftwerken, Vorteile, die darin liegen, dass je nach der Entsorgungs- oder Versorgungslage auf den billigsten bzw. weitgehend vorkostenfreien Stoff zurückgegriffen werden kann. Auch ein weitergehender Austausch von Gew.-% Asche gegen Gesteinsstaub oder umgekehrt ist erfindungsgemäss vorgesehen, wobei die der Asche zukommenden wirtschaftlichen Vorteile, und die dem Gesteinsstaub zukommenden technischen Vorteile jeweils massgebend sind. Die Asche weist erfindungsgemäss eine Körnung von < 100 µm, vorzugsweise < 60 µm aufweist.

Die wirtschaftliche Bedeutung liegt in dem Einsatz der aus Wirbelschichtfeuerungsanlagen kommenden Asche als teilweise oder vollständiger Ersatz des Zementanteils, der zur Erzielung der Grünfestigkeit benötigt wird (Kornband 1, Beispiel II).

Ein Schaumbetonstein mit ausreichender Druckfestigkeit und günstiger Wärmeleitzahl ist erfindungsgemäss dann gegeben, wenn das Gemisch neben bis zu 40 Gew.-% Asche von Wirbelschichtfeuerungsanlagen, 0 bis 20 Gew.-% E-Filterstaub von Kraftwerken, 12 bis 32 Gew.-% Gesteinsstaub aus Mahlanlagen, 5 bis 15 Gew.-% Zement, 2 bis 8 Gew.-% Kalk, 0 bis 1 Gew.-% Quarzmehl und 0,02 bis 0,04 Gew.-% Aluminiumpulver sowie 28 bis 38 Gew.-% Wasser aufweist. Ein derartiges Gemisch von Ausgangskomponenten kann in vorteilhafter Weise zu einem Schaumbetonstein weiterverarbeitet werden, der in der Bauindustrie für die verschiedensten Zwecke, besonders für die Wärmedämmung eingesetzt werden kann.

Zur Herstellung von Schaumbetonsteinen, insbesondere mit einem Zuschlagstoff aus staubartigen Sekundärstoffen und Abgängen des Steinkohlenbergbaus dient ein Verfahren, bei dem aus dem Zuschlagstoff, Reaktionsmittel und Blähmittel mit Wasser ein Mörtelkuchen hergestellt, in Form gegossen und nach Erreichen der Grünfestigkeit entschalt, in Steine aufgeteilt und anschliessend gehärtet wird. Erfindungsgemäss ist hierzu vorgesehen, dass die in Steinkohlenaufbereitungsanlagen, insbesondere nach der Flotation anfallenden Feinst- bzw. Ultrafeinstberge entwässert, in Wirbelschichtfeuerungsanlagen unter Zugabe von Kalk unterhalb ihrer Schmelztemperatur ausgebrannt, mit feingemahlenem, ungelöschtem Kalk und Aluminiumpulver und Wasser zu einem Mörtelkuchen gemischt und zu Schaumbetonsteinen weiterverarbeitet werden. In der Steinkohlenaufbereitung fallen insbesondere in der Flotationsstufe feinste und ultrafeinste Körnungen an Bergematerial an. Dieses Bergematerial wird auf ca. 30 Gew.-% Restwassergehalt entwässert und dann in einer Wirbelschichtfeuerungsanlage ausgebrannt. Dabei wird durch die Zugabe von Kalk der in den Bergen enthaltene Schwefel eingebunden. Die erhaltene Asche macht sich einmal durch den Gehalt an schwefelsaurem Kalk vorteilhaft im späteren Mörtelkuchen positiv bemerkbar und zum anderen dadurch, dass die Asche aufgrund der Beachtung der Schmelztemperatur der Mineralien nicht in Kugelform mit geschlossener Oberfläche, sondern in einer amorfen Mineralstruktur anfällt. Die Morfologie der einzelnen Körner ist unregelmässig. Überwiegend sind die Kanten gerundet und plattig, aber auch stengelig. Daneben sind nadelartige Kristalle festzustellen. Die Oberfläche besitzt grosse Haftfähigkeit. Sie ist zum Teil porös, schuppenartig und klüftig. Daher ist dieses Material auch ohne weitere Vorbehandlung beispielsweise Absiebung zusammen mit Kalk und Aluminiumpulver sowie Wasser zu Mörtel zu verarbeiten. Die hydraulischen Eigenschaften bewirken eine Grünfestigkeit, die den Einsatz von Zement vollständig überflüssig macht, der ansonsten zur Erlangung einer ausreichenden Grünfestigkeit zwingend notwendig wäre.

Je nach Auflagen bzw. den vorgesehenen Einsatzfällen kann das Verfahren erfindungsgemäss variiert werden, indem das Verhältnis von Wasser und Blähmittel zu Zuschlagstoff und Reaktionsmittel entsprechend der gewünschten Steinrohdichte eingestellt wird. Die Steinrohdichte kann wahlweise zwischen 1,2 und 0,5 kg/dm³ eingestellt werden, wobei die Druckfestigkeit des Materials, in Abhängigkeit von der Steinrohdichte steht. Sie beträgt ca. 7,5 N/mm² bei einer Steinrohdichte von ca. 1,2 und sinkt bis 2,5 N/mm² bei einer Steinrohdichte von 0,5 kg/dm³.

Als einer der möglichen vorgeschalteten Verfahrensschritte ist erfindungsgemäss der zu sehen, dass beim Mahlen von Bergen mit einer Rohdichte von < 2,2 kg/dm³, vorzugsweise 2,4 kg/dm³ zu Bergebrechsand, -splitt und -schotter aus Tiefengestein der anfallende Staub aufgefangen und zusätzlich zur Asche aus Wirbelschichtfeuerungsanlagen mit Zement, Kalk, Aluminiumpulver und Wasser zu einem Mörtelkuchen vermengt wird. Vorteilhaft dabei ist, dass der beispielsweise in der Entstaubungsanlage aufgefangene feine Gesteinsstaub ohne weitere Vorbehandlung zum Einsatz kommen kann, wobei hier erstmals eine Möglichkeit geschaffen ist, diesen ansonsten nicht abzulagernden feinsten Staub wirtschaftlich zu verwerten. Dabei wird der Mörtelkuchen anschliessend in Steine geteilt und dann 12 Stunden unter Sattdampfbedingungen gehärtet. Der nachgeschaltete Verfahrensschritt kann also auch bei einem derartigen erweiterten Verfahren eingehalten werden. Eine vorteilhaft frühe Grünfestigkeit ist gemäss der nachfolgenden Ausbildung der Erfindung erreichbar, wobei Asche, Kalk, Aluminiumpulver und Wasser 4 bis 5 Minuten zu einem Mörtelkuchen gemischt werden, der nach kurzer Wartezeit entschalt, geteilt und 6 bis 12 Stunden gehärtet wird. Hierbei kann wiederum in vorteilhafter Weise auf dem bekannten Verfahren aufbauend ein Vorgehen zur Verfügung gestellt werden, das bei gleichem oder hier sogar niedrigerem Aufwand Schaumbetonsteine mit guten bis besten Eigenschaften erzeugen lässt. Die Härtezeit kann erheblich reduziert werden, was neben organisatorischen Vorteilen insbesondere Energieersparnisvorteile mit sich bringt.

Je nach Notwendigkeit und gewünschter Rohdichte kann es vorteilhaft sein, wenn eine geringe Menge Quarzmehl zusätzlich zugemischt wird.

Zur Reduzierung des Zementanteils bei Einsatz von Steinstaub oder Bergesand wird weiter vorgeschlagen, unter gleichzeitiger Reduzierung des Zement- und Gesteinsstaubanteils den Anteil der Asche aus Wirbelschichtfeuerungsanlagen zu vergrössern. Vorteilhaft ist dabei, dass aufgrund der hydraulischen Eigenschaften der Wirbelschichtfeuerungsanlagen Asche neben dem Gesteinsstaubanteil auch der Zementanteil reduziert werden kann. Je nach Rohstoffbasis kann das Verfahren selbst variert werden, indem der Anteil an Gesteinsstaub ganz oder teilweise durch E-Filterstaub aus Steinkohlenkraftwerken ersetzt wird. Da entsprechende Kraftwerksanlagen beispielsweise über das gesamte Gebiet der Bundesrepublik Deutschland verteilt sind, ist eine weitgehende Standortunabhängigkeit dieser Verfahrensvariante als besonders vorteilhaft zu nennen.

Erläutert wurde vorab, dass durch Einsatz von Asche aus Wirbelschichtfeuerungsanlagen, in denen Flotationsberge verfeuert worden sind, der Anteil an Zement wesentlich reduziert werden kann. Hierdurch hebt sich die Wirtschaftlichkeit des Verfahrens erheblich an. Darüberhinaus kann es aber auch zweckmässig sein, dass Verfahren zeitlich abzukürzen, insbesondere, wenn ein hoher Ausstoss entsprechender Anlagen gewünscht wird bzw. notwendig ist. Hierzu wird erfindungsgemäss nun vorgeschlagen, dass der Anteil an Gesteinsstaub aus der Brechanlage der gewünschten oder möglichen Blähzeit entsprechend gewählt bzw. eingestellt wird. Ein derartiger mit Zuschlagstoff Gesteinsstaub versehener Mörtelkuchen bläht in überraschend kurzer Zeit auf, so dass durch Einstellung des Anteils an Gesteinsstaub die Zeit, die der Mörtelkuchen vor der Zerteilung und vor dem Härten verbringen muss, beeinflusst werden kann. Je höher der Anteil an Gesteinsstaub ist, desto kürzer kann die Blähzeit eingestellt werden. Durch Einstellung des Gehaltes an Gesteinsstaub bzw. an Asche aus der Wirbelschichtfeuerungsanlage kann somit die Wirtschaftlichkeit und/oder die Produktivität des Verfahrens deutlich beeinflusst werden.

Im Bauwesen werden zu Isolierzwecken verschiedene schaum- bzw. faserartige Stoffe eingesetzt, wobei die Dämmstoffe zwischen vorhandene Schalungen bzw. Gesteinsschichten gebracht werden. Nachteilig dabei ist, dass die Verwendung von Kunststoff besondere Vorsichtsmassnahmen erfordert und aufgrund der gestiegenen Kosten eine erhebliche Kostenbelastung darstellt. Zur Reduzierung dieser Kostenbelastung wird nun erfindungsgemäss ein Verfahren zur Herstellung einer Wärme- und/oder Schallisolierung bei Wohn- und Industriebauten unter Anwendung des Verfahrens zur Herstellung von Schaumbetonsteinen bzw. unter teilweiser Anwendung dieses Verfahrens vorgeschlagen, indem nämlich die Asche von in Wirbelschichtfeuerungsanlagen eingesetzten Flotationsbergen allein oder unter Zusatz von Filterstaub aus E-Filtern von Kohlekraftwerken oder von Gesteinsstaub aus Bergebrechanlagen mit Zement, Kalk, Aluminiumpulver der bei der Herstellung von Schaumbetonsteinen üblichen Anteile zu einem Mörtelkuchen vermengt und dann fortschreitend in den Hohlraum einer vorgegebenen Konstruktion oder in den Zwischenraum zweier Wandungen gefüllt wird und dort bläht und in einer dämmenden Struktur erhärtet. Ein derartiges Herstellungsverfahren ist insbesondere in der Nähe von Steinkohlenbetrieben bzw. Steinkohlenverarbeitungsbetrieben von Vorteil, weil dort die preisgünstigen Zuschlagstoffe zur Verfügung stehen. Sie können zum Einsatzort transportiert und dort mit den übrigen Anteilen vermengt und dann durch geeignete Pumpen oder sonstige Aggregate in den Hohlraum eingebracht werden. Ausserdem können derartige Massen auch eingesetzt werden, um Hohlblocksteine mit Wärmedämmmaterial erfindungsgemässer Art zu verfüllen. Sobald dieses Material, das ja nur Grünfestigkeit aufweist, gegen Witterungseinflüsse geschützt ist, kann es die Funktion der Wärmedämmung voll erfüllen.

Durch Variation des Anteiles des Aluminiumpulvers auf die mehrfache, vorzugsweise die doppelte sonst bei Schaumbetonsteinen übliche Menge kann der Anteil der Gasblasen und damit letztlich der Wärmedämmwert wesentlich erhöht werden. Ebenso kann der Anteil des Zementes den evtl. notwendigen Standfestigkeiten entsprechend vorzugsweise um 50% erhöht werden, um so die Grünfestigkeit zu optimieren.

Eine weitere Beeinflussung ist dadurch möglich, dass die Abbrände aus Wirbelschichtfeuerungsanlagen vor der Zugabe auf unter 2 mm aufgemahlen oder sogar auf unter 0,2 mm aufgemahlen und dann mit Bergesand gemischt werden, wobei die Abbrände 40 bis 45% und der Bergesand 10 bis 15% eine Gesamtmischung ausmachen.

Die Erfindung zeichnet sich insbesondere dadurch aus, dass erstmals die Möglichkeit gegeben ist, Schaumbetonsteine zur Verfügung zu stellen, die bei ausreichenden Druckfestigkeitseigenschaften und Wärmeleitwerten Komponenten enthalten, die von Sandlagerstätten unabhängig zur Verfügung stehen. Dass es sich dabei um Komponenten handelt, die bei anderer Verwertung erhebliche Probleme der Aufhaldung mit sich bringen würden, gibt der gefundenen Lösung besonderes Schwergewicht. Vorteilhaft ist dabei weiter, dass bei Verwendung von durch Ausbrand Kohlenstoff freigemachten und mit Kalk angereicherten Bergematerialien ein Zuschlagstoff zur Verfügung steht, der zugleich hydraulische Eigenschaften aufweist und somit ohne Zementzusatz Grünfestigkeiten erbringt, die eine hervorragende Weiterverarbeitung des so hergestellten Mörtelkuchens ermöglichen. Aufgrund der günstigen Grünfestigkeitswerte kann darüberhinaus auch noch das Härten vereinfacht bzw. in kürzerer Zeit vorgenommen werden. Verfahren und der so hergestellte Schaumbetonstein weisen somit gegenüber herkömmlichen Verfahren und Schaumbetonsteinen entscheidende Vorteile auf.

Weitere Merkmale und Vorteile des Erfindungsgegenstandes ergeben sich aus der nachfolgenden Zeichnung, in der bevorzugte Ausführungsbeispiele näher erläutert werden. Es zeigen:

Fig. 1 eine perspektivische Darstellung eines Schaumbetonsteins ohne den erfindungsgemässen Zuschlag Wirbelschichtfeuerungsasche mit dem Zuschlagstoff Gesteinsstaub dafür,

Fig. 2 eine perspektivische Darstellung eines Schaumbetonsteines mit Zuschlagstoff Asche aus Wirbelschichtfeuerungsanlagen.

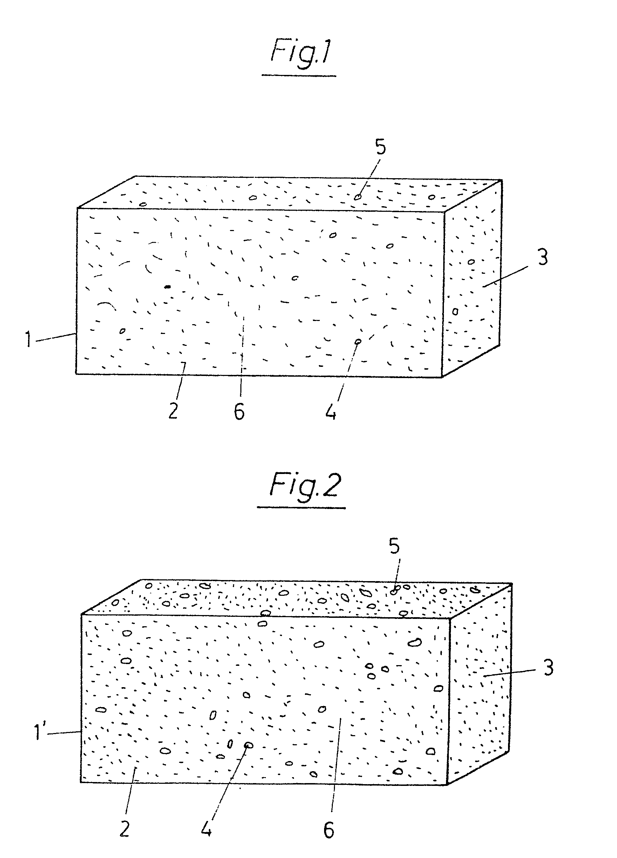

Die Fig. 1 und 2 zeigen Schaumbetonsteine 1, 1', deren Form dem eines Mauersteins gleicht. Üblicherweise sind Schaumbetonsteine aber grossvolumiger bzw. flächenartig ausgebildet. Wie die Fig. 1 mit dem nicht aus der erfindungsgemässen Mischung hergestellten Schaumbetonstein zeigt, sind durch die Reaktion des Aluminiums im Körper des Schaumbetonsteins 1 zahlreiche Poren 2, 3 ausgebildet. Mit 6 sind Dichtzonen bezeichnet. Deren Ausbildung ist aber bei den Steinen nach Fig. 1 und Fig. 2 auf die Versuchsbedingungen zurückzuführen.

Fig. 2 zeigt einen Schaumbetonstein 1', der ganz ohne Zusatz von Zement und nur mit dem Zuschlagstoff Asche aus Wirbelschichtfeuerungsanlagen hergestellt ist. Hier finden sich neben den ebenfalls gleichmässig ausgebildeten und gleichmässig angeordneten Poren 2, 3 Grobpartikel 4, 5, die über den Körper des Schaumbetonsteins 1 verteilt sind.

Beispiel I (nicht erfindungsgemäss)

Der Gesteinsstaub von Mahlanlagen zur Gewinnung von Bergebrechsand, -splitt und -schotter aus Tiefengestein mit einer mittleren Rohdichte von 2,4 kg/dm³ wird aufgefangen und für die Herstellung von Schaumbetonsteinen eingesetzt. Dabei weist dieses Material eine Körnung von 0,50 bis 0 mm mit folgendem Kornband auf:

| Körnung | Gew.-% |
|---|---|
| + 500 μm = | 0,2 |
| 500 – 300 μm = | 19,8 |
| 300 – 200 μm = | 25,4 |
| 200 – 100 μm = | 25,6 |
| 100 – 30 μm = | 12,0 |
| 30 – 10 μm = | 5,0 |
| 10 – 5 μm = | 3,0 |
| 5 – 4 μm = | 1,5 |
| 4 – 3 μm = | 1,5 |
| 3 – 2 μm = | 2,6 |
| 2 – 1 μm = | 2,7 |
| – 1 μm = | 0,7 |
| | 100,0 |

Zement zur Erzielung der Grünfestigkeit PZ 45 F
Kalk als Reaktionsmittel Branntkalk
Blähmittel Aluminiumpulver
Rezepturen

| | Gruppe 1 | Gruppe 2 | Gruppe 3 |
|---|---|---|---|
| Material | g | g | g |
| Bergesand 0,25 mm | 2000 | 2000 | 2000 |
| Zement | 600 | 600 | 600 |
| Kalk (80% CaO) | 200 | 250 | 300 |
| Quarzmehl | – | 20 | 50 |
| Aluminiumpulver | (2,0) | (1,7) | (1,5) |
| Wasser | 1500 | 1500 | 1400 |
| Härtezeit h | 12 | 12 | 12 |
| Steinrohdichte kg/dm³ | 0,5 | 0,8 | 1,1 |
| Druckfestigkeit N/mm² | 2,6 | 4,8 | 7,4 |

Dieser Zuschlagstoff ist nahezu kohlenstofffrei. Sein $SiO_2$-Gehalt reicht für die Reaktion mit dem gebrannten Kalk zu einem Calciumhydrosilikat aus, so dass der erhaltene Schaumbetonstein unter Sattdampfbedingungen gehärtet werden kann. Die Kornumhüllungen durch das Hydrosilikat und dessen Erhärtung heben die Zerfallsneigung der Tonminerale auf. Es entsteht ein raumstabiler Stein, dessen Belastbarkeit für mittlere Ansprüche im Hochbau reicht und dessen Wärmedämmwert die Einhaltung der Forderungen nach der Wärmeschutzverordnung ohne zusätzliche Massnahmen möglich macht. Der erhaltene Gesteinsstaub wird mit Zement, Kalk und Aluminiumpulver nach den verschiedenen Rezepturen gemischt, dann in Formen gegossen, nach dem Blähen ausgeschaltet, mit Hilfe von Drähten in vorgesehene Platten bzw. Steine geschnitten und anschliessend unter Sattdampfbedingungen 12 Stunden gehärtet.

Beispiel II

Beim Trennprozess in einer Steinkohlenaufbereitungsanlage angefallene feinstes und ultrafeinstes Bergematerial wird zunächst auf einen Restwassergehalt von ca. 30 Gew.-% entwässert und dann einer Wirbelschichtfeuerungsanlage zur Energiegewinnung zugeführt. Unter Zugabe von Kalk zur Einbindung des Schwefels werden die Berge bei Temperaturen von ca. 950 °C ausgebrannt. Der Ausbrand erfolgt unterhalb der Schmelztemperatur der Mineralien, so dass die Asche nicht in Kugelform mit geschlossener Oberfläche, sondern in einer amorphen Mineralstruktur anfällt. Die Asche der Wirbelschichtfeuerungsanlage liegt mit 0,1 bis 0 mm mit folgendem Kornband vor:

| Körnung | Gew.-% |
|---|---|
| + 30 µm = | 15,0 |
| 30 – 10 µm = | 21,0 |
| 10 – 5 µm = | 19,0 |
| 5 – 4 µm = | 8,0 |
| 4 – 3 µm = | 10,0 |
| 3 – 2 µm = | 13,0 |
| 2 – 1 µm = | 11,7 |
| – 1 µm = | 2,3 |
| | 100,0 |

Kalk
als Reaktionsmittel Branntkalk      (80% CaO)
Blähmittel
Aluminiumpulver
Quarzmehl      in der Feinheit = 10 µm
Rezepturen

| Material | Gruppe 1 g | Gruppe 2 g | Gruppe 3 g |
|---|---|---|---|
| Gemischasche W.S.-Anlage | 2000 | 2000 | 2000 |
| Kalk (80% CaO) | 200 | 200 | 300 |
| Aluminiumpulver | (2,0) | (1,8) | (1,5) |
| Quarzmehl | – | 25 | 50 |
| Wasserzugabe | 2000 | 1900 | 1900 |
| Mischzeiten | 4 + 5 | 4 + 5 | 4 + 5 |
| Härtezeiten h | 6 | 8 | 12 |
| Steinrohdichte kg/dm³ | 0,5 | 0,8 | 1,2 |
| Druckfestigkeit N/mm² | 2,3 | 4,9 | 7,6 |

Die Asche wird unter Zugabe von feingemahlenem, ungelöschtem Kalk und einer geringen Zugabe von Aluminiumpulver bestimmter Körnung als Blähmittel sowie unter Zugabe von Wasser zu einem Mörtel gemischt, der nach kurzer Zeit eine schaumige Struktur bildet und sehr bald eine ausreichende Grünfestigkeit erreicht. Diese Grünfestigkeit erlaubt es, ihn zu entschalen, durch Trennschnitte zu teilen und im Autoklaven unter Sattdampfbedingungen zu härten. Verschiedene erprobte Zusammensetzungen sind oben wiedergegeben, ebenso sie unterschiedlich erprobte Härtezeiten.

Beispiel III
Neben dem Einsatz von reinen Aschen aus Wirbelschichtfeuerungsanlagen und dem Gesteinsstaub aus Mahlanlagen von Tiefengestein ist auch der Einsatz von E-Filterstaub aus Kraftwerksanlagen, insbesondere Steinkohlenkraftwerksanlagen und Gemischen untersucht worden. Die Versuche mit Kombinationen der Zuschlagstoffkomponenten hatten folgendes Ergebnis, wobei Gruppe 2 eine nicht erfindungsgemässe Mischung darstellt:

| Material | Gruppe 1 g | Gruppe 2 g |
|---|---|---|
| Bergesand 0,25 | 500 | 1500 |
| Gemischasche W.S.-Anlage 0,1 | 1500 | – |
| E.-Filterstaub | | 1000 |
| Zement | 200 | 700 |
| Kalk | 150 | 300 |
| Quarzmehl | – | 50 |
| Blähmittel Aluminiumpulver | (1,5) | 1,2 |
| Wasserzugabe | 1400 | 1400 |
| Mischzeit | 4 + 5 | 4 + 5 |
| Härtezeit | 12 | 12 |
| Steinrohdichte kg/dm³ | 0,8 | 1,17 |
| Druckfestigkeit N/mm² | 2,6 | 4,6 |

Es hat sich gezeigt, dass bei der Mischung von Wirbelschichtasche mit der Mehrfraktion von Bergesand bzw. E-Filterstaub aus Kraftwerksanlagen mit der Mehrfraktion Bergesand ebenfalls Steine geringer Rohdichte und ausreichender Druckfestigkeit hergestellt werden können. Eine solche Kombination kann zweckmässig sein, wenn aus Endsorgungsgründen Zuschlagstoffkomponenten besonders billig oder vorkostenfrei zur Verfügung gestellt werden können. Desweiteren kann die Kombination von wirtschaftlicher Bedeutung sein, weil durch den Einsatz der Wirbelschichtabbränder der Zementanteil zur Erzielung einer ausreichenden Grünfestigkeit entfallen oder doch sehr stark reduziert werden kann.

Durch die gezielte Zugabe von Abbränden aus der Wirbelschichtfeuerung in vorgesehener Zusammensetzung (unter 2 bzw. unter 0,2 mm) und Menge (40 bis 48% von der Gesamtmischung) wird eine Verringerung der Abbindezeit bis zur ausreichenden Grünfestigkeit auf etwa 50% und eine Erhöhung der Druckfestigkeit erreicht. Die für die Klassierung und Zerkleinerung anfallenden Kosten werden durch diese wesentlichen Vorteile mehr als ausgeglichen.

**Patentansprüche**
1. Schaumbetonstein aus mineralischem Zuschlagstoff, einem Reaktionsmittel mit Härter zur Erreichung der notwendigen Grünfestigkeit, einem Blähmittel und Wasser, dadurch gekennzeichnet, dass als Zuschlagstoff und zugleich als Härter die Asche von in Wirbelschichtfeuerungsanlagen unter Zusatz von Kalk und unter Einhaltung einer Temperatur unterhalb ihrer Schmelztemperatur ausgebrannte Flotationsberge dient.
2. Schaumbetonstein nach Anspruch 1, dadurch gekennzeichnet, dass der Zuschlagstoff ein Gemisch aus dem Gesteinsstaub von Mahlanlagen zur Gewinnung von Bergebrechsand, -splitt und -schotter aus Tiefengestein, der Asche von Wirbelschichtfeuerungsanlagen und ggf. des E-Filterstaubes aus Steinkohlenkraftwerken ist.

3. Schaumbetonstein nach Anspruch 1, dadurch gekennzeichnet, dass der Zuschlagstoff ein Gemisch aus der Asche von Wirbelschichtfeuerungsanlagen, dem Gesteinsstaub der Mahlanlagen und/oder dem E-Filterstaub von Steinkohlenkraftwerken ist.

4. Schaumbetonstein nach Anspruch 1 bis Anspruch 3, dadurch gekennzeichnet, dass die als Zuschlagstoff eingesetzte Asche von in Wirbelschichtfeuerungsanlagen eingesetzten Flotationsbergen eine Körnung von < 100 µm, vorzugsweise < 60 µm aufweist.

5. Schaumbetonstein nach Anspruch 2 bis Anspruch 4, dadurch gekennzeichnet, dass das Gemisch neben bis zu 40 Gew.-% Asche von Wirbelschichtfeuerungsanlagen, 0 bis 20 Gew.-% E-Filterstaub von Kraftwerken, 12 bis 32 Gew.-% Gesteinsstaub aus Mahlanlagen, 5 bis 15 Gew.-% Zement, 2 bis 8 Gew.-% Kalk, 0 bis 1 Gew.-% Quarzmehl und 0,02 bis 0,04 Gew.-% Aluminiumpulver sowie 28 bis 38 Gew.-% Wasser aufweist.

6. Verfahren zur Herstellung von Schaumbetonsteinen nach Anspruch 1 und/oder einem der nachfolgenden Ansprüche 2 bis 5 mit einem Zuschlagstoff aus staubartigen Sekundärstoffen und Abgängen des Steinkohlenbergbaus, wobei aus dem Zuschlagstoff, Reaktionsmittel und Blähmittel mit Wasser ein Mörtelkuchen angemischt, in Formen gegossen, nach dem Blähen und dem Erreichen der Grünfestigkeit entschalt, in Steine aufgeteilt und anschliessend gehärtet wird, dadurch gekennzeichnet, dass die in Steinkohlenaufbereitungsanlagen, insbesondere nach der Flotation anfallenden Feinst- bzw. Ultrafeinstberge entwässert, in Wirbelschichtfeuerungsanlagen unter Zugabe von Kalk unterhalb ihrer Schmelztemperatur ausgebrannt, mit feingemahlenem, ungelöschtem Kalk und Aluminiumpulver und Wasser zu einem Mörtelkuchen gemischt und zu Schaumbetonsteinen weiterverarbeitet werden.

7. Verfahren nach Anspruch 6, dadurch gekennzeichnet, dass das Verhältnis von Wasser und Blähmittel zu Zuschlagstoff und Reaktionsmittel entsprechend der gewünschten Steinrohdichte eingestellt wird.

8. Verfahren nach Anspruch 6, dadurch gekennzeichnet, dass beim Mahlen von Bergen mit einer Rohdichte von > 2,2 kg/dm³, vorzugsweise 2,4 kg/dm³ zu Bergebrechsand, -splitt und -schotter aus Tiefengestein der anfallende Staub aufgefangen und zusätzlich zur Asche aus Wirbelschichtfeuerungsanlagen mit Zement, Kalk, Aluminiumpulver und Wasser zu einem Mörtelkuchen vermengt wird.

9. Verfahren nach Anspruch 6, dadurch gekennzeichnet, dass der Mörtelkuchen in Steine aufgeteilt und dann 12 Stunden unter Sattdampfbedingungen gehärtet wird.

10. Verfahren nach Anspruch 6, dadurch gekennzeichnet, dass die Asche, Kalk, Aluminiumpulver und Wasser 4 bis 5 Min. zu einem Mörtelkuchen gemischt werden, der nach kurzer Wartezeit entschalt, geteilt und 6 bis 12 Stunden gehärtet wird.

11. Verfahren nach Anspruch 6 und Anspruch 10, dadurch gekennzeichnet, dass geringe Mengen Quarzmehl zusätzlich zugemischt werden.

12. Verfahren nach Anspruch 6 und Anspruch 8, dadurch gekennzeichnet, dass der Anteil an Gesteinsstaub ganz oder teilweise durch E-Filterstaub aus Steinkohlenkraftwerken ersetzt wird.

13. Verfahren nach Anspruch 8, dadurch gekennzeichnet, dass der Anteil an Gesteinsstaub aus der Brechanlage der gewünschten oder möglichen Blähzeit entsprechend gewählt bzw. eingestellt wird.

14. Verfahren zur Herstellung einer Wärme- und/oder Schallisolierung bei Wohn- und Industriebauten unter Anwendung des Verfahrens nach Anspruch 6 bis 13, dadurch gekennzeichnet, dass die Asche von in Wirbelschichtfeuerungsanlagen eingesetzten Flotationsbergen, allein oder unter Zusatz von Filterstaub aus E-Filtern von Kohlekraftwerken oder von Gesteinsstaub aus Bergebrechanlagen mit Zement, Kalk, Aluminiumpulver der bei der Herstellung von Schaumbetonsteinen üblichen Anteile zu einem Mörtelkuchen vermengt und dann fortschreitend in den Hohlraum einer vorgegebenen Konstruktion oder in den Zwischenraum zweier Wandungen gefüllt wird und dort bläht und in einer dämmenden Struktur erhärtet.

15. Verfahren nach Anspruch 14, dadurch gekennzeichnet, dass der Anteil des Aluminiumpulvers auf die mehrfache, vorzugsweise die doppelte sonst bei Schaumbetonsteinen übliche Menge gesteigert wird.

16. Verfahren nach Anspruch 14 und Anspruch 15, dadurch gekennzeichnet, dass der Anteil des Zementes den evtl. notwendigen Standfestigkeiten entsprechend, vorzugsweise um 50% erhöht wird.

17. Verfahren nach Anspruch 14, dadurch gekennzeichnet, dass die Abbrände aus Wirbelschichtfeuerungsanlagen vor der Zugabe auf unter 2 mm aufgemahlen und zur Verkürzung der Abbindezeit bis zur ausreichenden Grünfestigkeit und Erhöhung der Druckfestigkeit zugemischt werden.

18. Verfahren nach Anspruch 14 und Anspruch 17, dadurch gekennzeichnet, dass die Abbrände aus Wirbelschichtfeuerungsanlagen vor der Zugabe auf unter 0,2 mm aufgemahlen und mit Bergesand gemischt werden, wobei die Abbrände 40 bis 45% und der Bergesand 10 bis 15% an der Gesamtmischung ausmachen.

19. Verfahren nach Anspruch 17 oder Anspruch 18, dadurch gekennzeichnet, dass die Abbrände mit 40 bis 48% und der Bergesand 10 bis 15% der Gesamtmischung ausmachend zugemischt werden.

**Revendications**

1. Aggloméré de béton mousse constitué d'agregat minéral, d'un agent de réaction avec durcisseur pour obtenir la résistance au vert nécessaire, d'un agent gonflant et d'eau, caractérisé par ce que l'on fait appel aux cendres de schistes de flottation à la fois comme agrégat et comme durcisseur brûlées dans des lits de fluidisation avec addition de chaux et en maintenant une température inférieure à leur température de fusion.

2. Aggloméré de béton mousse suivant la revendication 1, caractérisé par ce que l'agregat est constitué d'un mélange de poussières de roche provenant de broyeurs produisant du sable de stériles, de grenailles de concassage et de pierrailles à base de roche plutonique, de cendres provenant de la combustion de charbon par lit de fluidisation et le cas échéant des poussières d'électrofiltres installés dans des centrales alimentées au charbon.

3. Aggloméré de béton mousse suivant la revendication 1, caractérisé par ce que l'agrégat est constitué d'un mélange comprenant les cendres provenant de la combustion de charbon par lit fluidisé, des poussières de roche des broyeurs et/ou des poussières d'électrofiltres installés dans des centrales alimentées au charbon.

4. Aggloméré de béton mousse suivant la revendication 1 à la revendication 3, caractérisé par ce que les cendres de schistes de flottation utilisées comme agrégat provenant de la combustion de charbon par lit fluidisé présentent une granulométrie de $<100 \mu m$, de préférence de $<60 \mu m$.

5. Aggloméré de béton mousse suivant la revendication 2 à la revendication 4, caractérisé par ce que le mélange présente, à côté de cendres de schistes de flottation provenant de la combustion de charbon par lit fluidisé dont la proportion peut atteindre 40% en poids, 0 à 20% en poids de poussières d'élactrofiltres installées dans des centrales alimentées au charbon, 12 à 32% en poids de poussières de broyeurs, 5 à 15% en poids de ciment, 2 à 8% en poids de chaux, 0 à 1% en poids de farine de quartz ainsi que 28 à 38% en poids d'eau.

6. Procédé de fabrication d'aggloméré de béton mousse suivant la revendication 1 et/ou l'une des revendications 2 à 5, comprenant un agrégat constitué de matières pulvérentes secondaires et de stériles provenant de la production charbonnière où un gateau de mortier est mélangé, coulé dans des moules, décoffré après avoir ateint la résistance au vert, divisé en agglomérés qui sont durcis ensuite, caractérisé par ce que les schistes respectivement extra-fins et ultrafins obtenus notamment à la suite de la flottation sont égouttés, brûlés dans des lits fluidisés en ajoutant de la chaux à une température inférieure à leur température de fusion et mélangés avec de la chaux non éteinte broyée finement et de la poudre d'aluminium et de l'eau pour en faire un gateau de mortier et transformées en agglomérés de béton mousse.

7. Procédé suivant la revendication 6, caractérisé par ce que le rapport d'eau et d'agent gonflant à l'agrégat et à l'agent de réaction est fixé suivant la densité brute de l'aggloméré que l'on cherche à obtenir.

8. Procédé suivant la revendication 6, caractérisé par ce qu'au cours du broyage de stériles avec une densité brute de $>2,2 kg/dm^3$, de préférence de $2,4 kg/dm^3$, effectué pour en obtenir du sable de stérile et de grenaille de concassage et de gravillon à partir de roche plutonique, les poussières obtenues sont recueillies et, en plus des cendres provenant de la combustion de charbon par lit fluidisé, mélangées avec du ciment, de la chaux, de la poudre d'aluminium et de l'eau pour en obtenir un gateau de mortier.

9. Procédé suivant la revendication 6, caractérisé par ce que le gateau de mortier est divisé en agglomérés et durci pendant 12 heures à la vapeur saturée.

10. Procédé suivant la revendication 6, caractérisé par ce que les cendres, chaux, poudre d'aluminium et eau sont mélangés 4 à 5 minutes pour en faire un gateau qui est, après un délai réduit, décoffré, divisé et durci pendant 6 à 12 heures.

11. Procédé suivant la revendication 6 et la revendication 10, caractérisé par ce que de faibles quantités de farine de quartz sont ajoutées en plus au mélange.

12. Procédé suivant la revendication 6 et la revendication 8, caractérisé par ce, que la proportion des poussières de stériles est remplacée entièrement ou en partie par des poussières d'électrofiltres installés dans les centrales alimentées au charbon.

13. Procédé suivant la revendication 8, caractérisé par ce que la proportion de poussières de stériles provenant du broyeur est respectivement choisie et réglée suivant le temps de gonflement désirée ou possible.

14. Procédé de fabrication d'une isolation calorifuge et/ou acoustique dans des maisons d'habitation et bâtiments industriels utilisant le procédé suivant les revendications 6 à 13, caractérisé par ce que les cendres provenant de la combustion de charbon par lit fluidisé sont utilisées seul ou avec l'addition de poussières d'électrofiltres installés dans les centrales alimentées au charbon ou de poussières de stériles provenant de broyeurs et mélangés avec du ciment, de la chaux, du poudre d'aluminium à des proportions usuelles dans la fabrication d'agglomérés de béton mousses pour en faire un gateau de mortier qui est ensuite progressivement mis dans les espaces creuses d'une construction donnée ou dans les interstices de parois, y gonfle et durcit dans une structure isolante.

15. Procédé suivant la revendication 14, caractérisé par ce que la proportion du poudre d'aluminium est augmentée de manière à présenter une quantité multiple, de préférence la double quantité de celle utilisée d'ordinaire dans la fabrication d'agglomérés de béton mousse.

16. Procédé suivant la revendication 14, caractérisé par ce que la proportion du ciment est augmentée en fonction des stabilités éventuellement nécessaires, de préférence de 50%.

17. Procédé suivant la revendication 14, caractérisé par ce que les pertes au feu de lits fluidisés sont broyées à une granulométrie inférieure à 2 mm avant leur addition et ajoutées pour réduire la durée de prise jusqu'à obtenir la résistance au vert suffisante et l'augmentation de la résistance à la compression.

18. Procédé suivant les revendication 14 et revendication 17, caractérisé par ce que les pertes au feu de lits fluidisés sont broyée avant l'addition à une granulométrie inférieure à 0,2 mm et mélangées avec du sable de stériles les pertes au feu présentant 40 à 45% et le sable de stériles 10 à 15% du mélange total.

19. Procédé suivant la revendication 17 ou la revendication 18, caractérisé par ce que les pertes au feu sont ajoutées au mélange de manière à présenter 40 à 48% du mélange total et que le sable de stériles est ajouté de manière à présenter 10 à 15% du mélange total.

## Claims

1. A foam concrete block made of mineral ballast, a reaction agent with hardener for achieving the necessary green strength, the swelling agent, and water, characterized in that the ashes of flotation tailings burnt out in fluidized bed firings with limestone addition at temperatures kept below their melting point are used as ballast and simultaneously as hardener.

2. A foam concrete block as per claim 1, characterized in that the ballast is made up as a blend of stone dust from crushing plants for production of sand, stone chips and coarse crushed stone from plutonic rock matter, the ashes from fluidized bed firings and, optionally, dust from the electrostatic filters of coal-fired power stations.

3. A foam concrete block as per claim 1, characterized in that the ballast matter consists of a blend of ashes from fluidized bed firings, the stone dust from crushing plants and/or ashes from electrostatic filters of coal-fired power stations;

4. A foam concrete block as per claims 1, 2 and 3, characterized in that the dust consisting of ashes of froth flotation tailings used in fluidized bed firings exhibits a particle size of < 100 μm, preferably < 60 μm.

5. A foam concret block as per claims 2, 3 and 4, characterized in that the blend contains besides 40% (by weight) of ashes from fluidized bed firings, 0 to 20% (by weight) of dust from electrostatic filters of power stations, 12 to 32% (by weight) of stone dust from crushing plants, 5 to 15% (by weight) of cement, 2 to 8% (by weight) of lime, 0 to 1% (by weight) of finely ground quartz, 0.02 to 0.04 (by weight) of aluminium powder, and 28 to 38% (by weight) of water.

6. Process for manufacture of foam concrete blocks as per claim 1 and/or one of the following claims 2 to 5 by use of ballast matter from pulverous secondary products and wastes from hardcoal production, implying a mortar cake being made up from the ballast matter, the reaction agent, the swelling agent, and water, cast in molds, removed from the molds after swelling and after the green strength being obtained, cut into blocks, and subsequently hardened, characterized in that the fine and ultra-fine waste from hardcoal preparation, in particular from froth flotation, are dewatered, burnt out in fluidized bed firings below their melting point, with addition of lime, then mixed with calcium hydroxide, aluminium powder, and water for making up a mortar cake of which foam concrete blocks are subsequently made.

7. Process as per claim 6, characterized in that the ratio of water and swelling agent versus ballast matter and reaction agent is adjusted according to the required raw density of the blocks.

8. Process as per claim 6, characterized in that the dust produced during grinding of white dirt with a raw density of $> 2.2\ kg/dm^3$, preferably $2.4\ kg/dm^3$, for producing sand, stone chips, and coarse crushed stone from plutonic rock matter is collected, and, in addition to ashes from fluidized bed firings, is blended with cement, lime, aluminium powder and mortar to make up a mortar cake.

9. Process as per claim 6, characterized in that the mortar cake is divided into blocks and subsequently hardened under saturated-steam conditions over 12 hours.

10. Process as per claim 6, characterized in that the ashes, the lime, the aluminium powder and the water are blended over 4 to 5 minutes to make up a mortar cake which, after a short waiting time, is removed from the molds, divided into blocks, and hardened over 6 to 12 hours.

11. Process as per claim 6 and claim 10, characterized in that small quantities of finely ground quartz are added.

12. Process as per claim 6 and claim 8, characterized in that the proportion of stonedust is replaced partially or totally by dust from electrostatic filters of coal-fired power stations.

13. Process as per claim 8, characterized in that the proportion of the stone dust from the crushing plant is selected/adjusted according to the require or possible swelling time.

14. Process for production of a thermal and/or sound insulation for dwelling houses and industrial buildings by using the methods as per claims 6 to 13, characterized in that the ashes from flotation tailings used in fluidized bed firings are blended on their own or with addition of dust from electrostatic filters from coal-fired power stations or stonedust from waste crushing plants, with cement, lime, and aluminium powder in the proportions corresponding to those of the production of foam concrete blocks, to form a mortar cake which then is filled successively into the hollow space of construction elements or into the space between to walls, and then allowed to swell und harden to form an insulating structure.

15. Process as per claim 14, characterized in that the proportion of aluminium powder is increased to a multiple, preferably the double, of the quantity normally used for foam concrete blocks.

16. Process as per claim 14 and claim 15, characterized in that the proportion of the cement is increased, preferably by 50%, according to the possibly required stability.

17. Process as per claim 14, characterized in that the burnt out matter from fluidized bed firings is ground to <2 mm prior to proportioning, for reducing the setting time until the necessary green strength is reached, and for increasing the compressive strength.

18. Process as per claim 14 and claim 17, characterized in that, prior to proportioning, the burnt out matter from fluidized bed firings is ground to below 0.2 mm and mixed with wastes sand, the proportion of the burnt out matter accounting to 40 to 45% of the total blend and the proportion of wastes sand accounting for 10 to 15% of the total blend.

19. Process as per claim 17 or claim 18, characterized in that the burnt out matter is added to account for 40 to 48% of the total blend, and the wastes sand is added to account for 10 to 15% of the total blend.

## Fig.1

## Fig.2